# FASCICULE DE BREVET EUROPEEN

(11) **EP 0 943 795 B1**
(45) Date de publication et mention de la délivrance du brevet: **12.01.2005**
(21) Numéro de dépôt: 99400668.2
(22) Date de dépôt: 19.03.1999
(51) Int. Cl.: F02K 9/64, C23C 4/12, B23P 15/26

(54) **Procédé de fabrication d'un circuit régénératif à fort flux thermique, notamment pour chambre de combustion de moteur-fusée**
Produktionsweise für einen regenerativen Wärmetauschkreislauf für hohen Wärmefluss, insbesondere für Raketenbrennkammern
Production method for a regenerative heat exchange circuit for high thermal flow, especially for rocket combustion chambers

(30) Priorité: 20.03.1998 FR 9803438
(43) Date de publication de la demande: 22.09.1999
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Cornu, Daniel, 27200 Vernon (FR); Verdy, Christophe, 90000 Belfort (FR); De Monicault, Jean-Michel, 27120 Croisy s/Eure (FR); Coddet, Christian, 90200 Giromagny (FR)
(74) Mandataire: Thévenet, Jean-Bruno

(56) Documents cités:
- EP-A- 0 413 983
- FR-A- 2 268 166
- US-A- 5 075 966
- "ADHERENT THERMAL BARRIER FOR COMBUSTION CHAMBER" NTIS TECH NOTES,1 février 1990, page 155 XP000103867
- PATENT ABSTRACTS OF JAPAN vol. 098, no. 005, 30 avril 1998 & JP 10 018911 A (MITSUBISHI HEAVY IND LTD), 20 janvier 1998

## Description

### Domaine de l'invention

La présente invention concerne un procédé de fabrication d'un circuit régénératif à fort flux thermique comprenant une structure avec une surface fonctionnelle interne en contact avec un premier fluide , et un ensemble de canaux formés dans le corps de la structure pour être parcourus par un second fluide en relation d'échange thermique avec le premier fluide , le procédé consistant à construire la structure autour d'un mandrin support réutilisable, à partir de ladite surface fonctionnelle interne, par des opérations de projection thermique et d'usinage.

L'invention concerne également un circuit régénératif à fort flux thermique obtenu par le procédé, tel qu'une chambre de combustion de moteur-fusée.

Des structures constituant des circuits régénératifs à fort flux thermique sont utilisées dans différents contextes, par exemple pour des échangeurs de chaleur, des aubes refroidies par circulation de liquide ou des parois d'enceintes de combustion.

Ainsi, les parois des enceintes de combustion telles que les chambres de combustion et les tuyères des moteurs-fusées, notamment à propergols liquides, qui sont en contact avec des gaz de combustion constituant un milieu de température élevée, sont en général refroidies pendant leur fonctionnement.

Un mode de refroidissement courant consiste à munir les parois d'enceintes de canaux de refroidissement. Ceci est le cas dans des lanceurs de satellites et avions spatiaux, mais également dans des propulseurs de satellites, des réacteurs nucléaires et des chaudières de haut rendement, et peut encore être le cas dans des boucliers thermiques ou nez d'engins volant à grande vitesse.

On a ainsi déjà proposé, notamment dans le cadre de moteurs-fusées, divers procédés de fabrication de parois de chambres de combustion permettant d'intégrer des canaux de refroidissement orientés en direction longitudinale, dans lesquels circule un fluide de refroidissement qui peut être l'un des ergols servant à alimenter le moteur-fusée, le système de refroidissement étant ainsi à régénération.

Les techniques de fabrication de telles chambres de combustion sont cependant délicates à mettre en oeuvre, longues et coûteuses.

Dans certaines applications particulières, il est également utile de pouvoir réchauffer une enceinte froide, par circulation d'un fluide chaud dans les passages ménagés dans la paroi de l'enceinte qui constitue aussi également un circuit régénératif.

### Art antérieur

Selon une première technique de fabrication de chambres de combustion refroidies par régénération pour moteurs-fusées à propergols liquides, des canaux de refroidissement sont usinés dans un corps de base interne formé d'une seule pièce à partir d'un matériau métallique bon conducteur de la chaleur, tel que du cuivre. Les canaux de refroidissement sont ainsi séparés les uns des autres par des cloisons du corps de base et un couvercle externe est réalisé par électrodéposition de multiples couches de nickel en alternance avec des reprises d'usinage obligatoires entre chaque passe d'électrodéposition. L'obturation des canaux avant l'électrodéposition est obtenue par application d'une résine conductrice.

On a représenté sur la figure 14 un exemple de paroi de chambre de combustion réalisée selon cette technique.

Une chemise interne 104, qui est réalisée par forgeage, par exemple en un matériau métallique tel que du Narloy Z, comporte des canaux de refroidissement 105 réalisés par usinage.

Une couche 107 d'obturation des canaux 105 est formée par électrodéposition et est elle-même recouverte de nickel également déposé par électrodéposition. Divers éléments de la coque extérieure 109 en superalliage tel que par exemple de l'inconel-718, sont assemblés au niveau de joints 110 par soudure par faisceau d'électrons.

La mise en forme de la chemise interne 104 de la chambre de combustion, ainsi que la fermeture des canaux 105 par électrodéposition constituent des inconvénients majeurs de ce procédé. En effet ces opérations sont longues et coûteuses. D'autre part chacune des soudures 110, utilisées pour l'assemblage final des composants de la chambre, constitue un risque potentiel de rupture. Ce sont ces désavantages que l'on cherche à supprimer par le recours au procédé de plasma-formage, selon une deuxième technique de fabrication de chambres de combustion.

On a représenté sur la figure 15 un exemple de paroi de chambre de combustion réalisée selon cette deuxième technique de fabrication connue consistant à réaliser tout ou partie de la structure de la chambre de combustion par projection thermique de poudres d'alliages définis.

Selon un exemple de tel procédé selon lequel la paroi de la chambre de combustion est réalisée en partant de l'intérieur et en allant vers l'extérieur de la chambre, on procède à la fabrication d'un mandrin 1 de projection en acier doux usiné selon les cotes intérieures de la chambre de combustion à obtenir.

Une première projection sous vide partiel permet alors de réaliser à la surface du mandrin 1 la chemise 4 en alliage de cuivre (Narloy Z...) de la future chambre. L'opération suivante consiste à y usiner les canaux de refroidissement 5, et à y introduire un matériau de remplissage consommable. Après suppression par usinage des excès de remplissage, une seconde projection sous vide partiel de l'alliage de cuivre permet de former une couche 7 de fermeture des canaux. Dans la foulée, la coque 8 en superalliage est directement construite par projection thermique sur la chemise en cuivre. La dernière opération consiste à éliminer par voie chimique le matériau de remplissage, de façon à libérer les canaux 5, ainsi qu'à éliminer le mandrin de projection 1.

On connaît également par le document "Adherent Thermal Barrier for Combustion Chamber", NTIS TECH NOTES, page 155, Février 1990, Springfield, VA, USA, un procédé de fabrication d'un circuit régénératif pour chambre de combustion de moteur-fusée, selon lequel un mandrin en aluminium est usiné à la forme cylindrique requise, une couche de barrière thermique en zirconium stabilisé par de l'yttrium est projetée par plasma sur le mandrin, une couche de nickel-chrome est projetée sur la couche précédente pour former une couche de liaison électriquement conductrice, une couche de cuivre est ajoutée par électroformage, des gorges longitudinales sont usinées dans la couche de cuivre, les gorges sont remplies de cire, une couche de cuivre finale est ajoutée par électroformage, la cire est éliminée par fusion et le mandrin en aluminium est détruit.

On a également déjà proposé de réaliser un mandrin support en plusieurs parties qui peut ainsi être réutilisable. A titre d'exemple, un mandrin est constitué de deux cônes en acier inoxydable séparés l'un de l'autre par une rondelle en acier doux, l'ensemble étant recouvert par un dépôt d'acier. Une fois la fabrication de la chambre de combustion terminée, la dissolution des inserts placés dans les canaux de refroidissement s'accompagne de celle de la rondelle et du dépôt d'acier. Les deux cônes peuvent alors être démontés et récupérés.

Les procédés connus restent cependant peu satisfaisants, notamment du fait de lenteurs dans les processus de dissolution des inserts et d'élimination des couches provisoires, et de difficultés à réaliser de façon optimale des structures de grande dimension.

### Objet et description succincte de l'invention

L'invention a pour objet de remédier aux inconvénients précités et de permettre la fabrication de structures de circuits régénératifs de façon plus commode que dans les procédés de l'art antérieur tout en permettant une optimisation des caractéristiques des structures fabriquées, même dans le cas de structures de grandes dimensions soumises à de forts flux thermiques.

Ces buts sont atteints, conformément à l'invention, grâce à un procédé de fabrication d'un circuit régénératif à fort flux thermique comprenant une structure avec une surface fonctionnelle interne en contact avec un premier fluide, et un ensemble de canaux formés dans le corps de la structure pour être parcourus par un second fluide en relation d'échange thermique avec le premier fluide , le procédé comprenant les étapes suivantes :
a) mise en place, autour d'un axe de rotation, d'un mandrin support réutilisable représentant le profil de ladite surface fonctionnelle interne de la structure, le mandrin support étant réalisé en un matériau dont le coefficient de dilatation thermique est très voisin ou légèrement supérieur à celui du matériau du corps de la structure,
b) réalisation sur le mandrin support d'une couche intermédiaire en un matériau distinct de ceux du mandrin support et du corps de la structure,
c) formation d'une série de canaux régulièrement répartis autour du mandrin et débouchant en regard de ladite couche intermédiaire, chacun des canaux étant pourvu d'un insert soluble comprenant un mélange d'un liant organique et de poudre métallique,
d) préchauffage du mandrin support à une température supérieure à environ 850°C et réalisation du corps de la structure par projection thermique sous vide ou sous basse pression au moyen d'une torche à plasma, avec maintien de la température du mandrin support à ladite température supérieure à 850°C,
e) usinage par l'extérieur, sans démontage du mandrin support, de canaux en forme de gorges dans le corps de la structure,
f) remplissage des canaux du corps de la structure à l'aide d'inserts solubles comprenant un mélange d'un liant organique et de poudre métallique,
g) formation d'une couche de fermeture des canaux du corps de la structure et formation d'une enveloppe externe de la structure par projection thermique sous vide ou sous basse pression au moyen d'une torche à plasma, après préchauffage et avec maintien du mandrin support à une température supérieure à environ 850°C,
h) suppression des inserts solubles des canaux du corps de la structure, des inserts solubles des canaux formés autour du mandrin support et de la couche intermédiaire, et
i) retrait du mandrin support réutilisable.

Selon une caractéristique préférentielle, avant l'étape de remplissage de canaux usinés dans le corps de la structure ou autour du mandrin support, des inserts filaires ou tubulaires, de préférence en matière plastique, comme une résine polyamide par exemple, sont introduits dans le fond des gorges formant les canaux pour permettre la formation ultérieure de cavités sous les inserts solubles dans le fond des canaux. Le retrait des inserts filaires est effectué avant l'étape suivante de projection thermique.

Selon un mode particulier de réalisation, l'étape de remplissage des canaux du corps de la structure à l'aide d'inserts solubles consiste en une opération de remplissage incomplet des canaux suivie d'une étape de projection thermique d'un matériau métallique qui termine le remplissage des canaux et forme une couche métallique recouvrant également les nervures de séparation des canaux, puis d'une étape d'usinage superficiel de ladite couche métallique jusqu'à la mise à nu de l'extrémité libre desdites nervures.

Dans le cas de la fabrication de structures de grandes dimensions, lors des opérations de projection thermique avec préchauffage du mandrin support à une température supérieure à environ 850°C, on procède pendant toute l'opération de projection thermique, à un apport de chaleur complémentaire par un dispositif de chauffage additionnel voisin du mandrin support

Selon des caractéristiques particulières de l'invention :
- on réalise le corps de la structure par projection thermique d'une poudre d'alliage Cu-Ag-Zr,
- on réalise le mandrin support en cuivre pur,
- on réalise la couche intermédiaire par projection thermique d'une poudre de fer,
- les inserts filaires sont constitués par des fils à base de résine polyamide,
- l'étape de projection thermique d'un matériau métallique qui termine le remplissage des canaux consiste en la projection thermique d'une poudre de fer sous vide ou sous basse pression au moyen d'une torche à plasma,
- l'étape de formation d'une couche de fermeture des canaux du corps de la structure consiste en la projection thermique d'une poudre d'alliage de Cu-Ag-Zr et l'étape de formation d'une enveloppe externe consiste en la projection thermique d'une poudre d'alliage à base de nickel tel qu'un alliage à base de nickel-cuivre constitué par le MONEL K 500 ou NU30AT.
- l'étape de suppression des inserts solubles des canaux du corps de la structure ou des canaux du mandrin est réalisée par circulation d'un fluide tel que de préférence de l'acide chlorhydrique.

Le procédé peut comprendre une étape supplémentaire de formation d'une couche de cuivre poreux par projection thermique réalisée entre la formation de la couche de fermeture des canaux du corps de la structure et l'étape de formation d'une enveloppe externe.
Selon un premier mode de réalisation avantageux de l'invention, l'étape c) de formation d'une série de canaux régulièrement répartis autour du mandrin a lieu avant l'étape b) de réalisation d'une couche intermédiaire et comprend l'usinage par l'extérieur dans le mandrin support, après son montage sur ledit axe de rotation, de canaux en forme de gorges, et le remplissage desdits canaux du mandrin support à l'aide d'inserts solubles comprenant un mélange d'un liant organique et de poudre métallique.

Dans ce cas, le procédé peut comprendre en outre, après l'étape de réalisation d'une couche intermédiaire, l'étape supplémentaire consistant en la réalisation, par projection thermique, sous vide ou sous basse pression au moyen d'une torche plasma, d'une couche de faible rugosité d'un matériau formant barrière thermique de type métallique ou oxydes.

A titre d'exemple, on peut réaliser la barrière thermique par projection thermique d'une poudre d'un superalliage tel que du MCrAIYTa.

Avantageusement, on réalise la barrière thermique en projetant en outre avant le superalliage une poudre de zircone ytriée pour former une couche superficielle de ce matériau.

Selon un autre mode particulier de réalisation, l'étape c) de formation d'une série de canaux régulièrement répartis autour du mandrin a lieu après l'étape b) de réalisation d'une couche intermédiaire et comprend le dépôt d'un alliage à base de cuivre sur la couche intermédiaire, l'usinage de l'alliage à base de cuivre pour définir des ailettes radiales entre lesquelles sont ménagés des interstices constituant lesdits canaux, et le remplissage desdits canaux à l'aide d'inserts solubles comprenant un mélange d'un liant organique et de poudre métallique.

Dans ce cas, le procédé peut comprendre en outre une étape consistant à déposer une couche de fer supplémentaire qui comble une partie restée libre dans les canaux au-dessus des inserts solubles et recouvre également les ailettes et une étape consistant à usiner ladite couche de fer supplémentaire pour faire émerger les ailettes à base de cuivre et ne conserver qu'une mince couche de fer au-dessus de chaque insert soluble, cette couche étant alignée avec la face libre des ailettes.

Ce deuxième mode de réalisation conduit à une structure de circuit régénératif du type échangeur thermique à ailettes.

On notera qu'à titre de variante, il est possible de réaliser également une structure de circuit régénératif du type échangeur thermique à ailettes dans le cadre du premier mode de réalisation dans lequel l'étape c) de formation d'une série de canaux régulièrement répartis autour du mandrin a lieu avant l'étape b) de réalisation d'une couche intermédiaire, les canaux en forme de gorges étant usinés par l'extérieur dans le mandrin support.

Selon cette variante de réalisation, le procédé comprend en outre, après l'étape b) de formation d'une couche intermédiaire sur le mandrin support, une étape supplémentaire b₁) consistant à usiner dans la couche intermédiaire des rainures extérieures présentant une hauteur h et une largeur ℓ telles que h/ℓ ≤ 1, en vue de former des ailettes radiales lors de l'étape de réalisation du corps de la structure par projection thermique.

Ainsi, cette variante du premier mode de réalisation du procédé selon l'invention permet de réaliser des ailettes radiales de faible hauteur, mais ne délimitent pas elles-mêmes les canaux principaux débouchant en regard de la couche intermédiaire, ceux-ci restant formés par usinage par l'extérieur dans le mandrin support.

Le procédé selon l'invention peut être appliqué d'une façon générale à la fabrication d'une structure constituée par un échangeur de chaleur.

Le procédé selon l'invention est particulièrement adapté à la fabrication d'une structure constituée par une chambre de combustion à haut flux thermique, telle qu'une chambre de combustion et une tuyère de moteur-fusée, en particulier d'un moteur-fusée de forte puissance de type cryogénique.

L'invention concerne également les circuits régénératifs obtenus selon les divers modes de réalisation du procédé de fabrication susmentionné.

### Brève description des dessins.

D'autres caractéristiques et avantages de l'invention ressortiront de la description détaillée de modes particuliers de réalisation, donnés à titre d'exemples, en référence aux dessins annexés, sur lesquels :
- la figure 1 est une section d'une paroi de circuit régénératif réalisée selon le procédé de fabrication conforme à l'invention et montrant d'une part différents éléments constitutifs définitifs du circuit régénératif et d'autre part différents éléments présents temporairement au cours de la mise en oeuvre du procédé,
- la figure 2 est une vue schématique montrant un exemple d'installation pour la mise en oeuvre du procédé selon l'invention,
- les figures 3 à 5 montrent des sections d'une paroi de circuit régénératif à différents stades du procédé de fabrication selon l'invention,
- la figure 6 montre, en coupe axiale, un exemple de mandrin support réutilisable pouvant être utilisé lors de la mise en oeuvre du procédé selon l'invention,
- la figure 7 est une section selon la ligne VII-VII de la figure 6,
- la figure 8 est une vue agrandie d'une partie de la figure 7 montrant une partie du processus de fabrication du mandrin support réutilisable,
- la figure 9 est une section d'une paroi de circuit régénératif montrant une partie du processus de fabrication dans le cas d'un mode de réalisation particulier appliqué à la fabrication d'une paroi à échangeur thermique à ailettes,
- la figure 10 est une section d'une paroi finale de circuit régénératif selon l'invention du type à barrière thermique,
- la figure 11 est une section d'une paroi finale de circuit régénératif selon l'invention du type à échangeur thermique à ailettes,
- la figure 12 est une section d'une paroi de circuit régénératif montrant une partie du processus de fabrication dans le cas d'un autre mode de réalisation particulier appliqué à la fabrication d'une paroi à échangeur thermique à ailettes,
- la figure 13 est un organigramme indiquant la succession des étapes principales d'un exemple de mise en oeuvre du procédé de fabrication selon l'invention,
- la figure 14 est une section d'une paroi de circuit régénératif fabriqué selon un procédé connu utilisant la galvanoplastie, et
- la figure 15 est une section d'une paroi de circuit régénératif fabriqué selon un procédé connu utilisant le plasma-formage.

### Description détaillée de modes particuliers de réalisation.

On décrira la mise en oeuvre de modes particuliers de réalisation du procédé selon l'invention en référence à la fabrication de circuits régénératifs à forts flux thermiques constitués par des structures creuses définissant des chambres de combustion ou tuyères de moteur-fusée.

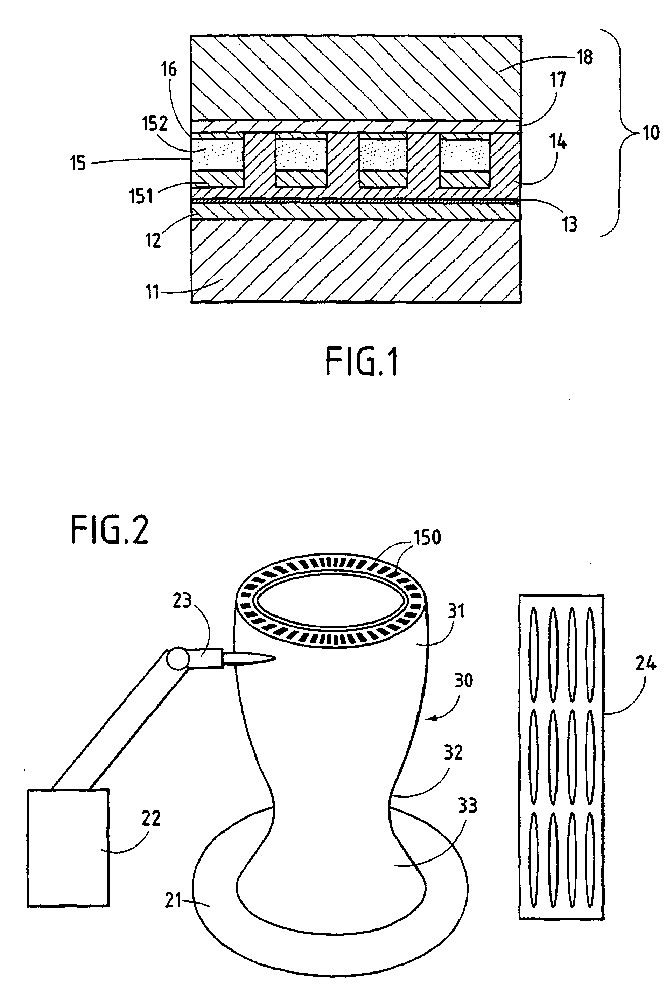

On voit sur la figure 2 un exemple d'une telle tuyère 30 de moteur-fusée en forme de sablier comprenant de façon classique une partie amont 31 formant la chambre de combustion proprement dite et convergent vers un col de tuyère 32 lui-même prolongé par une partie aval divergente 33. Dans le cas d'un moteur-fusée à ergols liquides, les ergols sont injectés dans la partie amont 31 formant chambre de combustion et les gaz résultant de la combustion sont évacués par le col 32 et le divergent 33 de la tuyère pour créer l'effort de poussée nécessaire. La paroi de la tuyère 30 est munie de canaux 150 essentiellement longitudinaux qui sont parcourus par un fluide de refroidissement, qui peut être l'un des ergols, pour procéder à un refroidissement de la paroi de la tuyère 30 dont la face interne est en contact avec les gaz chauds. Les canaux 150 doivent présenter une géométrie bien définie et être répartis sur tout le pourtour de la tuyère 30 pour assurer un échange thermique qui optimise les performances. C'est pourquoi le procédé de fabrication du circuit régénératif constitué par la tuyère 30 est particulièrement important pour assurer une fabrication de haute qualité tout en limitant les coûts.

Le procédé de fabrication selon l'invention consiste à élaborer par projection thermique les matériaux structuraux depuis la surface fonctionnelle de la paroi de la structure qui est située du côté des gaz chauds.

Dans le cas d'une chambre de combustion, la construction depuis la surface fonctionnelle située du côté des gaz chauds revient à réaliser la structure en partant du profil intérieur et en allant jusqu'à l'enveloppe externe. Une telle démarche est adaptée aussi bien à des chambres présentant une très faible section interne de passage des gaz, qu'à des chambres de grandes dimensions.

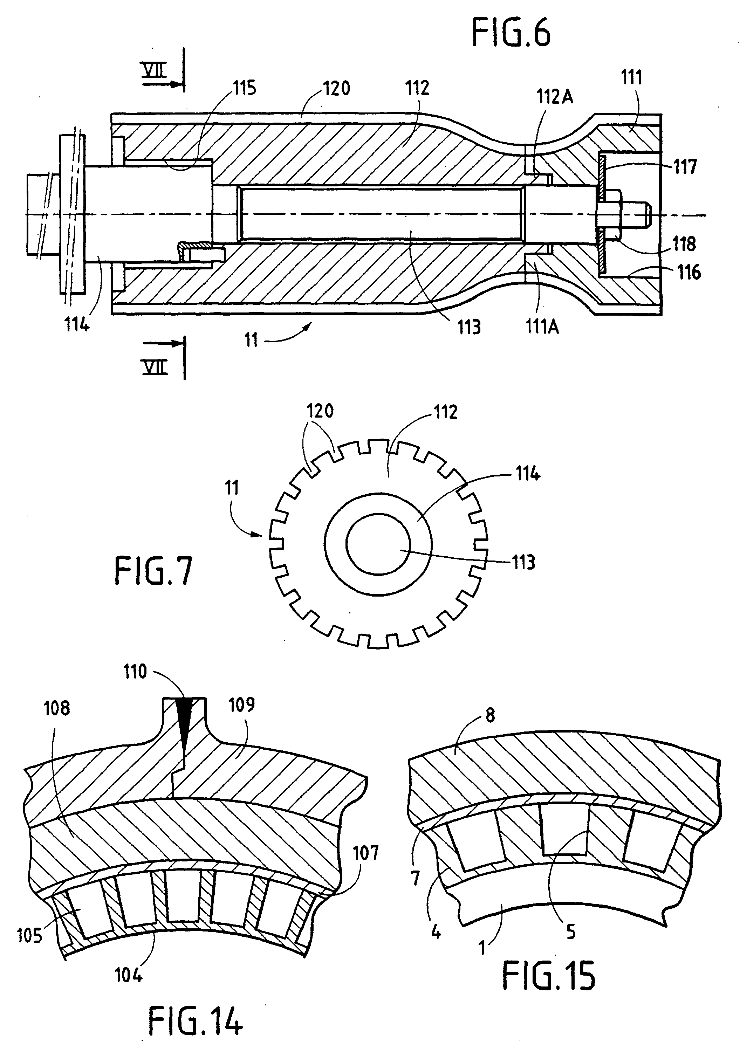

La première étape du procédé selon l'invention consiste à réaliser un mandrin support 11 dont la surface externe représente le profil intérieur de la structure 10 à réaliser. On a représenté sur les figures 6 et 7 un exemple de mandrin support 11 qui est conçu pour être réutilisable et sert d'outillage pour les différentes opérations de projection thermique et d'usinage intervenant au cours de la fabrication de la structure 10 constituée à titre d'exemple par la tuyère 30.

Le mandrin 11 est réalisé en deux parties 111, 112 qui sont en contact l'une avec l'autre au niveau de la partie dont la section est la plus étroite et correspond au col de la tuyère à fabriquer. Les deux parties 111, 112 peuvent être réunies par emboîtement, au niveau de leurs parties terminales 111A, 112A situées au niveau du col. Le mandrin 11 est traversé par un arbre 113 centré sur l'axe longitudinal du mandrin 11. L'arbre central 113 est lui-même solidaire d'un arbre 114 engagé dans un logement 115 et claveté sur la partie de mandrin 111 pour assurer l'entraînement en rotation du mandrin 11 à partir d'un plateau mobile 21 (figure 2) dont est solidaire l'arbre 114. Un système d'assemblage 118 par exemple du type vis-écrou disposé dans un logement 116 de la partie de mandrin 112 à l'extrémité de l'arbre 113 assure avec une rondelle 117 la solidarisation des deux parties de mandrin 111, 112.

Le mandrin 11 est réalisé en un matériau dont le coefficient de dilatation thermique est très proche, ou légèrement supérieur à celui du matériau du corps de la structure auquel il doit donner le profil. Ceci permet d'obtenir un profil rigoureux sans écarts dus à la dilatation du mandrin support 11 et réduit fortement les niveaux de contrainte lors des opérations de dépôt de matière.

A titre d'exemple, si le corps 14 d'un circuit régénératif est en alliage Cu-Ag-Zr, le mandrin 11 peut être réalisé en cuivre pur.

Selon un autre aspect du procédé selon l'invention, après réalisation du mandrin et avant de commencer les opérations de dépôt d'un matériau pour la réalisation de la structure 10 à fabriquer, on dispose sur toute la surface extérieure du mandrin 11 une couche intermédiaire 12 (figures 1 et 3 à 5) qui est réalisée en un matériau différent de celui du mandrin 11 et de celui de la structure 10 à réaliser et qui peut être détruite par dissolution chimique à la fin du processus de fabrication de la structure 10 pour permettre la séparation de la structure 10 réalisée et du mandrin 11, sans détruire ce dernier qui peut ainsi être réutilisable et peut être facilement retiré grâce à sa constitution en deux parties dissociables 111, 112 (figure 6).

La couche intermédiaire 12 de séparation du mandrin 11 et de la structure 10 peut par exemple être réalisée en fer. Le dépôt peut être réalisé par projection thermique d'une poudre de fer sous vide ou faible pression à l'aide d'une torche au plasma 23 commandée par un robot 22, le mandrin support 11 étant placé verticalement sur un plateau tournant 21 et rendu solidaire en rotation de celui-ci par l'arbre d'accouplement 114 (figures 2 et 6). Le procédé de projection thermique sous vide par torche au plasma, encore appelé procédé VPS ("vacuum plasma spraying") est connu en lui-même et ne nécessite donc pas de description plus détaillée.

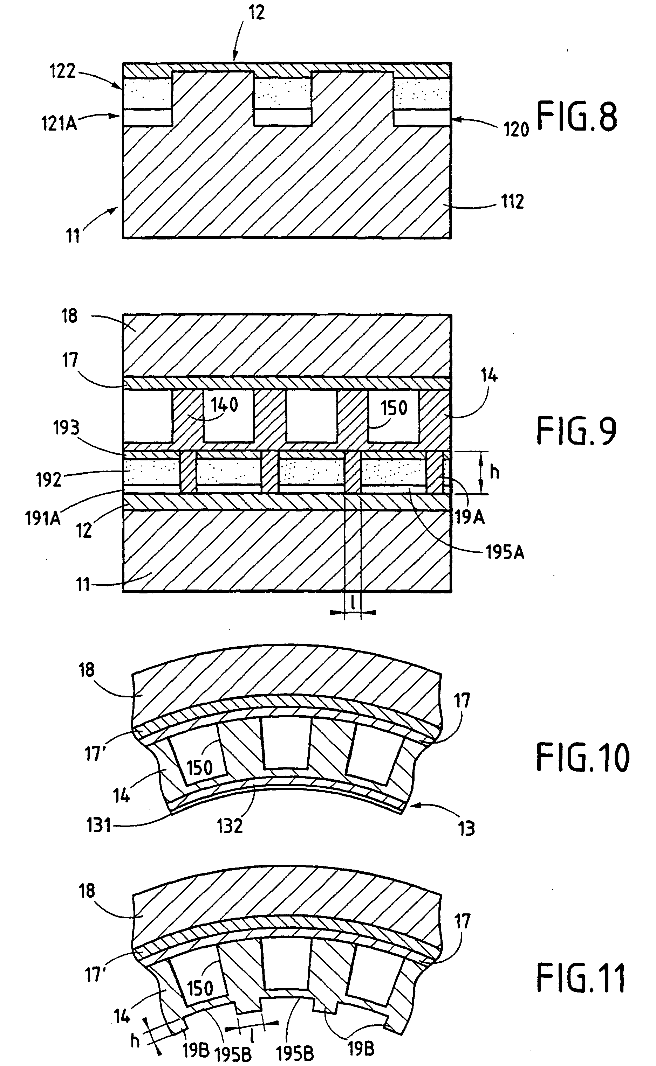

Selon un mode particulier de réalisation de l'invention, afin de faciliter et accélérer la dissolution de la couche intermédiaire 12 pour assurer la séparation et le dégagement du mandrin 11 à la fin du processus de fabrication de la structure 10, on réalise dans la surface périphérique extérieure du mandrin 11 monté sur le plateau tournant 21 des canaux longitudinaux 120 en forme de gorges usinées dans le mandrin. Avant le dépôt de la couche intermédiaire 12 sur le mandrin 11, des inserts filaires en matière plastique, par exemple en matériau à base de résine polyamide, sont disposés dans le fond des gorges 120 puis les canaux 120 sont remplis d'inserts solubles 122 comprenant un mélange d'un liant organique et de poudre métallique (figure 8). Les inserts filaires peuvent alors être retirés pour ménager un espace libre 121A dans le fond des canaux 120 tandis que les inserts solubles 122 obturant les canaux 120 permettent de procéder au dépôt de la couche intermédiaire 12.

La présence des canaux 120 à la périphérie du mandrin 11 et le fait que les canaux ne soient que partiellement obturés par les inserts solubles 122 facilite l'opération de dissolution de la couche intermédiaire 12 à la fin du processus de fabrication de la structure 10 plasmaformée. En effet, lorsque l'on procède à la dissolution chimique par circulation d'un fluide tel que de l'acide chlorhydrique, l'acide chlorhydrique circule d'emblée facilement dans le fond des canaux 120 pour dissoudre d'abord les inserts solubles 122 puis, en circulant dans les canaux 120 du mandrin 11 entièrement dégagés, assure également rapidement une dissolution de la couche intermédiaire 12 sans avoir le temps d'attaquer le mandrin proprement dit ou les éléments de la structure 10 réalisés en alliage à base de cuivre ou de nickel.

Après le dépôt de la couche intermédiaire 12 sur le mandrin support 11 et après une éventuelle opération d'usinage pour obtenir le profil exact de la structure 10 à fabriquer, le mandrin 11 restant sur le plateau tournant 21, le processus de fabrication proprement dite de la structure 10 peut commencer par la projection thermique d'une fine couche 13 d'un matériau formant barrière thermique, sur la couche intermédiaire 12. La présence d'une barrière thermique réalisée par projection sur le support 11, 12, avant même la réalisation du reste de la structure 10, permet d'avoir en final pour la surface 13 de la structure 10 une faible rugosité, dans la mesure où la rugosité du dépôt 13 est alors conditionnée par celle de la couche intermédiaire 12.

La barrière thermique 13 peut être constituée par un superalliage ou du MCr Al Yta avec ou non présence d'une couche superficielle de zircone ytriée.

La barrière thermique 13 est réalisée par le même procédé de projection thermique (VPS) que celui utilisé ensuite pour réaliser le corps 14 de la structure 10 et avec la même installation déjà décrite en référence à la figure 2. La barrière thermique 13 permet de garantir une bonne adhérence grâce à l'interdiffusion opérée au cours des projections ultérieures entre cette couche et le corps 14 du circuit régénératif à base de cuivre.

La construction du corps 14 de la structure 10 en matériau à base de cuivre sur le mandrin support 11 est réalisée par projection thermique ; en l'occurrence en projection sous vide ou sous basse pression au moyen de la torche plasma 23. La poudre métallique projetée répond aux critères de qualité à obtenir en final pour le dépôt (composition chimique, propriétés physiques) et est adaptée en taille de grains de poudre aux conditions de projection. Dans le cas de la projection de Cu-Ag-Zr il s'agit de poudre de taille inférieure à 106 µm, de préférence comprise entre 10 et 63 µm, à faible teneur en oxygène (< 150ppm).

La projection thermique pour la fabrication du corps 14 comme pour la formation de la barrière thermique 13 est réalisée sur le mandrin support 11 préalablement préchauffé à plus de 850°C et cette température doit être maintenue pendant toute la durée de la projection thermique. Pour les composants de grande taille cette température est maintenue au moyen d'un chauffage additionnel 24 (figure 2) qui selon le diamètre du composant peut être un chauffage par effet joule, un chauffage par induction ou encore un chauffage au moyen d'une torche additionnelle non utilisée pour la projection de poudre et dont les paramètres de fonctionnement peuvent de ce fait être optimisés pour la seule fonction de chauffage. Cette condition de chauffage additionnel est impérative pour obtenir un dépôt à caractéristiques mécaniques élevées.

Des canaux 150 sont ensuite usinés dans le corps 14 de façon classique mais en bénéficiant du mandrin support de projection 11 comme outillage de positionnement. Ainsi, il n'y a pas de montage et démontage d'outillage entre opérations successives au cours de la fabrication. L'usinage des canaux 150 par l'extérieur est possible quelle que soit la taille de la chambre : il n'y a pas de difficulté liée aux petites géométries de chambres.

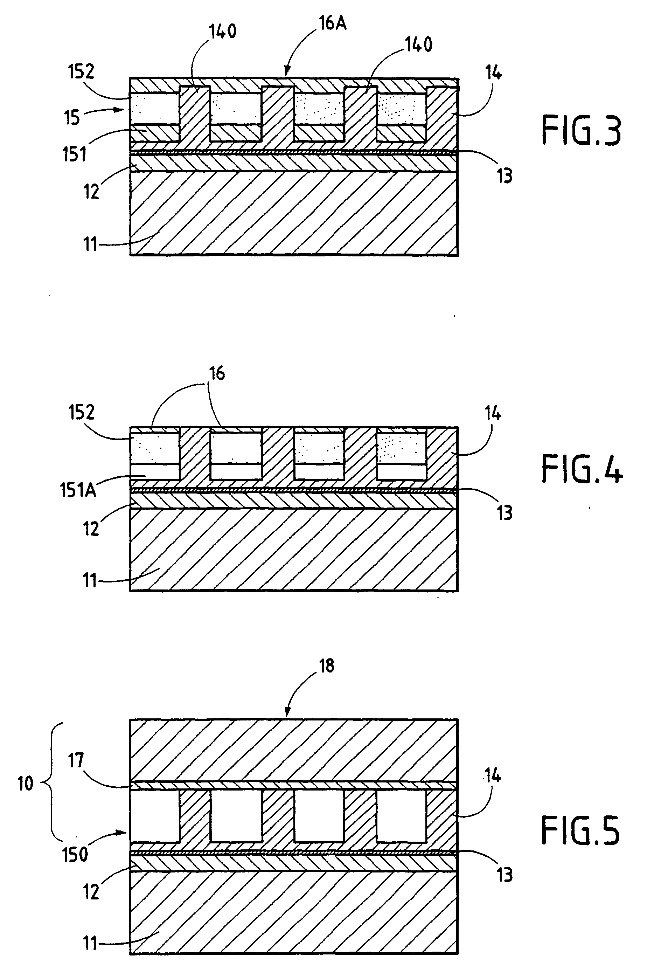

Le remplissage partiel des canaux 150 est effectué, comme pour les canaux 120 du mandrin, au moyen d'inserts solubles 152 composés d'un liant organique et de poudre métallique. Ce type d'insert s'adapte quel que soit le profil de la structure 10 et quelles que soient les variations de section des canaux 150. Au fond des canaux, une cavité 151A (figures 1 et 4) est aménagée, comme pour les canaux 120 du mandrin support 11, grâce à l'emploi temporaire de fils ou tubes en matière plastique 151, par exemple à base de résine polyamide (figure 3). En pratique, les fils 151 sont retirés dès que les inserts solubles 152 ont été réalisés et peuvent ainsi former un dégagement 151A au fond des canaux 150 avant même l'étape suivante de dépôt d'une couche supplémentaire 16A (contrairement à ce qui a été représenté sur la figure 3 où la couche 16A apparaît déjà sur le dessin). La présence d'espaces libres 151A au fond des canaux 150 joue un rôle très important lors de l'étape ultérieure de dissolution chimique des inserts solubles 152 et du restant 16 de la couche supplémentaire 16A, grâce à une circulation immédiate d'acide sur la totalité de la longueur des canaux 150. Ainsi, le gain en temps pour la dissolution chimique des inserts solubles 152 et pour les parties résiduelles 16 de la couche supplémentaire 16A est très important, comme dans le cas de la dissolution de la couche intermédiaire 12 qui intervient à la fin du processus de fabrication pour retirer le mandrin 11 et bénéficie de la circulation accélérée d'acide dans les canaux 120 du mandrin 11.

Les inserts 15 constitués par les inserts solubles 152 superposés aux inserts filaires 151 sont placés dans les canaux 150 en ménageant à la partie supérieure un léger retrait par rapport aux nervures 140 du corps 14 séparant les différents canaux 150 (figure 3). De la sorte, lors du dépôt effectué ensuite d'une couche supplémentaire 16A, par exemple de fer, par projection thermique (VPS), le dépôt de fer s'effectue avec une adhérence suffisante grâce à l'ancrage résultant des parties 16 de la couche 16A qui pénètrent dans la partie supérieure des canaux 150.

Le remplissage final des canaux 150 est ainsi réalisé par projection thermique de fer, de préférence sous vide ou à basse pression. Ce dépôt 16, après usinage superficiel jusqu'à la mise à nu du sommet des nervures 140 du corps 14 (figure 4) assure la précision de la section des canaux et la rugosité demandée pour la couche suivante 17.

Dans certains cas, si les exigences sont moindres sur la précision de la section des canaux 150 et sur la rugosité demandée, la nouvelle couche 17 peut être déposée directement sur le liant organique des inserts solubles 152, qui affleure alors le sommet des nervures 140. L'étape consistant à déposer une couche 16A et à usiner cette couche jusqu'à ne conserver que des parties 16 achevant de combler les canaux 150 peut alors être supprimée.

Dans tous les cas, la fermeture des canaux 150 par une couche de matériau 17 et la construction du matériau d'une enveloppe externe 18 sont réalisés par projection thermique, en l'occurrence en projection sous vide ou sous basse pression au moyen de la même torche plasma 23, la structure 10 en cours de réalisation restant en place sur le mandrin 11 placé sur la table tournante 21. Comme lors de la réalisation de la barrière thermique 13 et du corps 14, la projection thermique assurant la formation de la couche 17 de fermeture des canaux 150 et celle de l'enveloppe externe 18 est réalisée sur le mandrin support 11 qui est préalablement préchauffé à plus de 850°C puis est maintenu à cette température pendant toute la durée de la projection, le cas échéant avec apport de chaleur par le dispositif 24 de chauffage additionnel.

La fermeture des canaux 150 est d'abord réalisée par exemple par projection de poudre d'alliage de Cu-Ag-Zr, pour former une couche de fermeture 17, puis l'enveloppe externe 18 est construite par projection par exemple d'une poudre d'alliage à base de nickel.

Dans le cas de la projection de Cu-Ag-Zr, la dimension des particules de la poudre peut être comprise entre 10 et 63 µm et la poudre présente une faible teneur en oxygène (< 150 ppm).

Le choix optimal de l'alliage utilisé pour la réalisation de l'enveloppe 18 prend en compte la compatibilité avec la sous-couche 17 en base cuivre (ex. : cas du Cu-Ag-Zr) en termes de possibilités de projection, de propriétés physiques, d'interdiffusion et de similitude de cycle de traitement thermique. Dans le cas d'une chambre à circuit régénératif en base de cuivre, dont Cu-Ag-Zr, l'alliage retenu est de type à base de Nickel-Cuivre (MONEL K500 ou NU30AT).

Comme indiqué précédemment, après la fin de la réalisation de l'enveloppe 18, la suppression des inserts solubles 152 des canaux 150 du corps 14 de la structure 10, la suppression des inserts solubles des canaux 120 du mandrin support 11 et la suppression des dépôts des couches intermédiaires 12, 16 en fer, sont réalisés par circulation d'acide chlorhydrique en milieu désaéré. Du fait de la présence de dégagements tels que 151 dans le fond des canaux 150 du corps 14 aussi bien que dans le fond des canaux 120 du mandrin 11, sur toute la longueur des canaux 150, 120, la circulation de l'acide est très rapide, ce qui accélère le processus de réalisation de la structure tout en garantissant une absence d'attaque des éléments constitutifs définitifs de la structure 10 ou du mandrin 11.

Il est important de noter que le mandrin 11 reste solidaire de la structure 10 durant tout le processus de fabrication et sert aussi bien d'outillage pour les séquences de projections thermiques que pour les étapes d'usinage. La précision de positionnement peut ainsi être très grande et il est possible d'usiner des canaux 150 même si le corps 14 présente une très faible épaisseur de paroi, par exemple de l'ordre de 0,7 mm ou même moins.

La figure 1 montre en coupe les couches constitutives d'un circuit régénératif 10 réalisé selon l'invention, avec un barrière thermique 13, un corps 10, une couche 17 de fermeture des canaux 150 et une enveloppe extérieure 18. La figure 1 montre en outre les éléments intervenant temporairement au cours du procédé de fabrication et qui ne font pas partie de la structure finale 10, du circuit régénératif, à savoir le mandrin support 11, une couche intermédiaire 12, des inserts 15 comprenant des inserts filaires 151 et des inserts solubles 152, des éléments 16 d'une couche de recouvrement des canaux 150.

La figure 10 montre en coupe sectorielle partielle, le produit final obtenu avec le procédé selon l'invention dans le cas d'un circuit régénératif avec barrière thermique réalisé de la façon décrite précédemment. Dans ce cas, la barrière thermique 13 peut comprendre une première barrière thermique superficielle mince 131 par exemple à base de zircone et une deuxième barrière thermique 132 à base d'un alliage de M Cr Al Y. La barrière thermique 13 est formée sur la face interne de la chemise 14 en alliage de cuivre dont les canaux 150 sont fermés par la couche 17 en alliage de cuivre, elle-même recouverte de l'enveloppe 18 en nickel.

Selon une variante de réalisation, on peut, lors de la fabrication du circuit régénératif, déposer par plasma formage, entre la couche 17 à base de cuivre et la couche 18 à base de nickel, une couche poreuse 17' par exemple de cuivre poreux, obtenue directement par projection thermique sur la couche 17 à base de cuivre et avant le dépôt de la couche 18 à base de nickel. Une telle couche poreuse 17' reste optionnelle.

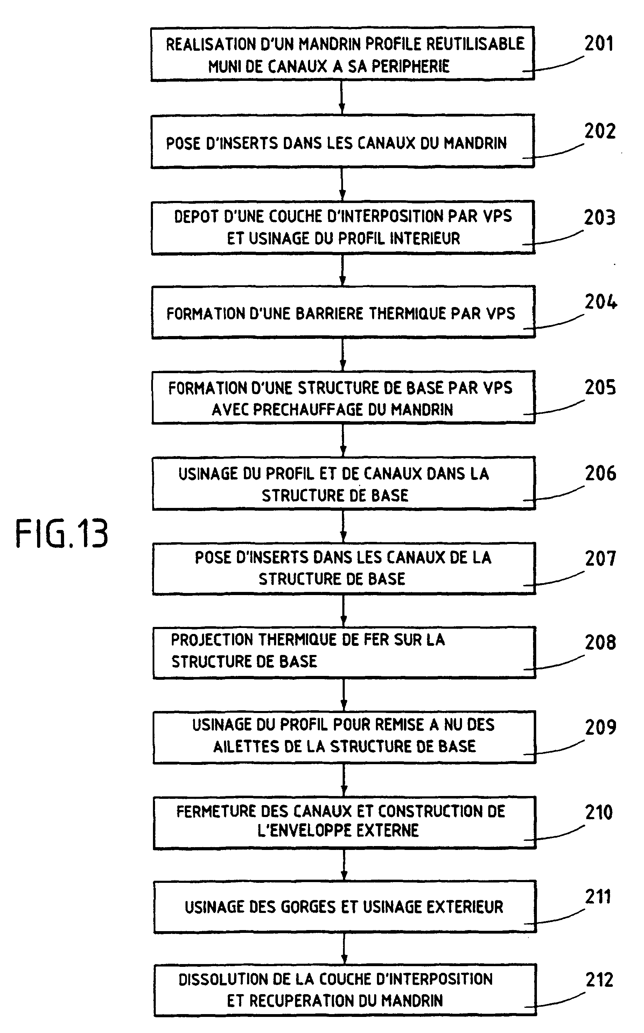

La figure 13 présente un organigramme comportant un résumé des principales étapes 201 à 212 d'un exemple de mise en oeuvre du procédé de fabrication selon l'invention.

L'étape 201 comprend ainsi la réalisation d'un mandrin support profilé 11, par exemple à base de cuivre pur, destiné à être réutilisable et pouvant être réalisé en au moins deux parties si la géométrie de la structure à fabriquer l'exige, le mandrin étant muni de gorges ou canaux longitudinaux 120 réalisés par usinage à sa périphérie.

L'étape 202 comprend la pose d'inserts dans les canaux 120 avec la présence temporaire d'inserts filaires au fond des canaux 120, la réalisation d'inserts solubles 122 à l'aide d'un liant organique et de poudres, puis le retrait des inserts filaires pour former des cavités 121A au fond des canaux 120.

L'étape 203 consiste en un dépôt d'une couche d'interposition 12, sur le mandrin support 11 équipé de ses inserts solubles 122, par projection thermique, puis en un usinage de la couche d'interposition 12 pour définir avec précision le profil intérieur de la structure 10.

L'étape 204 consiste en la formation d'une barrière thermique 13 par projection thermique, le support étant maintenu à une température supérieure à 850°C.

L'étape 205 comprend la formation du corps de base 14 de la structure 10 par projection thermique, le support étant maintenu à une température supérieure à 850 °C.

L'étape 206 comprend l'usinage du profil et de canaux 150 dans la face extérieure du corps de base 14 de la structure 10.

L'étape 207 comprend la pose d'inserts 15 dans les canaux 150 avec la présence temporaire d'inserts filaires 151 au fond des canaux 150, la réalisation d'inserts solubles 152 à l'aide d'un liant organique et de poudres, puis le retrait des inserts filaires 151 pour former des cavités 151A au fond des canaux 150.

L'étape 208 optionnelle consiste en le dépôt par projection thermique d'une couche de fer pur 16A sur la corps de base 14 avec ancrage de la couche dans la partie supérieure des canaux 150, la couche 16A définissant la géométrie et la rugosité des canaux 150.

L'étape 209, liée à l'étape 208, consiste en l'usinage de la couche 16A pour mettre à nu les extrémités des nervures 140 du corps de base 14 séparant les canaux 150.

L'étape 210 consiste en la fermeture des canaux 150 par projection thermique pour former une couche de fermeture 17, avec une maintien du mandrin support 11 à une température supérieure à 850°C et, toujours avec un maintien de cette température, projection thermique d'un matériau pour former l'enveloppe externe 18, une couche poreuse 17' pouvant le cas échéant être déposée avant l'enveloppe externe 18.

L'étape 211 consiste en l'usinage de gorges et l'usinage extérieur de la structure 10 constituant le circuit régénératif.

L'étape 212 constitue une étape finale avec dissolution chimique des inserts solubles encore disposés dans les canaux 120, 150 et des couches d'interposition en fer pur 12, 16, avec circulation rapide d'acide dans le fond des canaux 120, 150, puis récupération du mandrin support 11.

On décrira maintenant, en référence à la figure 9, un mode particulier de réalisation du procédé selon l'invention, conduisant à un circuit régénératif dans lequel la barrière thermique 13 du circuit de la figure 10 est remplacée par un échangeur de chaleur à ailettes comportant des ailettes radiales 19A ménageant entre elles des canaux longitudinaux 195A.

Dans le cas de la figure 9, après l'étape de formation d'une couche intermédiaire de fer 12 sur le mandrin 11, d'une façon qui peut être analogue à ce qui a été décrit plus haut, il est procédé à une étape de dépôt d'un alliage à base de cuivre, tel que par exemple un alliage Cu-Ag-Zr, sur la couche intermédiaire 12, puis à une étape d'usinage de l'alliage à base de cuivre pour définir des ailettes radiales 19A entre lesquelles sont ménagés des espaces libres ou canaux 195A. Dans le cas de ce mode de réalisation particulier, les ailettes radiales 19A présentent une hauteur h relativement importante et telle que le rapport entre la hauteur h sur la largeur ℓ d'une ailette soit supérieur à 1 de manière à définir entre les ailettes 19A des canaux 195A sensiblement équivalents aux canaux 120 formés dans le mandrin 11 dans le mode de réalisation de la figure 8.

ll est ensuite procédé à un remplissage partiel des espaces libres 195A en forme de canaux d'une façon analogue aux opérations de remplissage partiel des canaux 120 du mandrin 11 ou des canaux 150 du corps 14 décrites plus haut. Ainsi, des inserts filaires peuvent être introduits temporairement dans le fond des interstices 195A entre ailettes 19A pour permettre un remplissage partiel de ces interstices 195A par des inserts solubles 192 en-dessous desquels sont formés des dégagements 191A après retrait des inserts filaires. Les inserts solubles 192 restent de préférence en retrait par rapport aux ailettes 19A de manière à permettre le dépôt d'une couche de fer, par le procédé VPS, cette couche comblant la partie libre des interstices 195A sur les inserts solubles 192 et recouvrant également les ailettes 19A.

L'étape suivante consiste à usiner la couche de fer pour faire émerger les ailettes 19A à base de cuivre et ne conserver qu'une mince couche 193 de fer au-dessus de chaque insert soluble 192, cette couche 193 étant alignée avec la face libre des ailettes 19A. Il est alors procédé au dépôt d'un alliage à base de cuivre pour former le corps 14 du circuit régénératif, puis, d'une façon identique à ce qui a été précédemment décrit en référence aux figures 3 à 5, on procède à l'usinage des canaux 150, au remplissage partiel de ces canaux 150 au moyen d'inserts solubles 152 comme représentés sur la figure 3, au dépôt d'une couche de fer par le procédé VPS (comme représenté sur la figure 3) et à l'usinage de cette couche de fer pour faire émerger les ailettes ou nervures 140 définies entre les canaux 150 (comme représenté sur la figure 4).

L'étape suivante consiste à déposer un alliage 17 à base de cuivre puis un alliage 18 à base de nickel. A titre de variante, une couche 17' de cuivre poreux pourrait aussi être déposée sur la couche 17 à base de cuivre avant le dépôt de l'alliage 18 à base de nickel.

L'étape finale consiste à faire circuler de l'acide dans les cavités 191A ménagées entre les ailettes 19A, de manière à permettre une dissolution rapide des inserts solubles 192, des couches résiduelles de fer 193 ainsi que la couche intermédiaire 12 en fer, ce qui permet de récupérer et réutiliser le mandrin 11.

On notera que dans le cas où l'on réalise un circuit régénératif 11 selon la variante du procédé qui vient d'être décrite en référence à la figure 9, il existe des ailettes 19A qui permettent de définir entre elles des cavités 195A débouchant face à la couche intermédiaire 12 formée sur le mandrin 11. Dans ce cas, ces cavités 195A peuvent jouer le rôle des cavités 120 du mandrin 11 et le mandrin 11 peut présenter une structure classique non cannelée. Le procédé qui vient d'être décrit en référence à la figure 9 reste cependant compatible avec l'utilisation d'un mandrin cannelé tel que celui de la figure 8. Dans ce cas, il existe simplement une première série de cavités 120 formées dans le mandrin 11 d'un côté de la couche intermédiaire 12 et une deuxième série de cavités 195A formées entre les ailettes 19 reliées au corps 14 de l'autre côté de la couche intermédiaire 12.

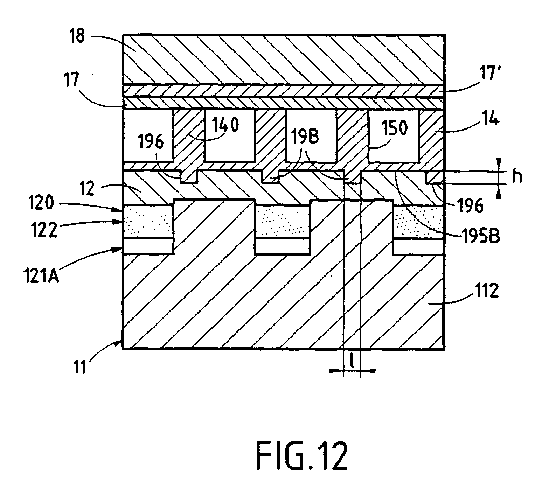

On décrira maintenant en référence aux figures 11 et 12 un autre mode de réalisation du procédé selon l'invention, conduisant à un circuit régénératif dans lequel la barrière thermique 13 du circuit de la figure 10 est remplacée par un échangeur de chaleur à ailettes comportant des ailettes radiales 19B ménageant entre elles des canaux longitudinaux 195B, les ailettes radiales 19B présentant une faible hauteur h telle que la rapport entre la hauteur h des ailettes radiales 19B et la largeur ℓ de ces ailettes soit inférieure ou égale à 1. Dans le cas de ce mode de réalisation particulier, l'étape de réalisation d'une couche intermédiaire 12 sur le mandrin support 11 a lieu après l'étape de formation d'une série de canaux 120 régulièrement répartis autour du mandrin 11, dans laquelle les canaux 120 en forme de gorges sont usinés par l'extérieur dans le mandrin support 11 et munis d'inserts comme indiqué plus haut, notamment en référence à la figure 13.

Selon le mode particulier de réalisation illustré sur la figure 12, le procédé comprend, après l'étape de formation d'une couche intermédiaire 12 sur le mandrin support 11, une étape supplémentaire consistant à usiner dans la couche intermédiaire 12 des rainures extérieures 196 présentant une hauteur h et une largeur ℓ telles que h/ℓ ≤ 1, en vue de permettre la formation d'ailettes radiales 19B lors de l'étape ultérieure de réalisation du corps 14 de la structure 10 par projection thermique.

Dans ce cas, les espaces 195B entre les ailettes 19B sont occupés par le matériau de la couche intermédiaire 12 jusqu'à la dissolution de celle-ci et ne contribuent pas à définir des canaux débouchant en regard de la couche intermédiaire 12 contrairement aux espaces 195A de la figure 9. Dans le mode de réalisation de la figure 12, la présence des canaux 120 à la périphérie du mandrin support 11 est donc indispensable et non facultative.

La figure 11 montre l'aspect d'une portion de paroi fabriquée selon le procédé illustré en référence à la figure 12, après dissolution de la couche intermédiaire 12.

## Revendications

1. Procédé de fabrication d'un circuit régénératif à fort flux thermique comprenant une structure (10) avec une surface fonctionnelle interne (13) en contact avec un premier fluide , et un ensemble de canaux (150) formés dans le corps (14) de la structure (10) pour être parcourus par un second fluide en relation d'échange thermique avec le premier fluide, le procédé comprenant les étapes suivantes :
a) mise en place, autour d'un axe de rotation (113), d'un mandrin support réutilisable (11) représentant le profil de ladite surface fonctionnelle interne (13) de la structure (10), le mandrin support (11) étant réalisé en un matériau dont le coefficient de dilatation thermique est très voisin ou légèrement supérieur à celui du matériau du corps (14) de la structure (10),
b) réalisation sur le mandrin support (11) d'une couche intermédiaire (12) en un matériau distinct de ceux du mandrin support (11) et du corps (14) de la structure (10),
c) formation d'une série de canaux (120 ; 195A) régulièrement répartis autour du mandrin (11) et débouchant en regard de ladite couche intermédiaire (12), chacun des canaux (120 ; 195A) étant pourvu d'un insert soluble comprenant un mélange d'un liant organique et de poudre métallique,
d) préchauffage du mandrin support (11) à une température supérieure à environ 850°C et réalisation du corps (14) de la structure (10) par projection thermique sous vide ou sous basse pression au moyen d'une torche à plasma, avec maintien de la température du mandrin support (11) à ladite température supérieure à 850°C,
e) usinage par l'extérieur, sans démontage du mandrin support (11), de canaux (150) en forme de gorges dans le corps (14) de la structure (10),
f) remplissage des canaux (150) du corps (14) de la structure (10) à l'aide d'inserts solubles (152) comprenant un mélange d'un liant organique et de poudre métallique,
g) formation d'une couche (17) de fermeture des canaux (150) du corps (14) de la structure (10) et formation d'une enveloppe externe (18) de la structure (10) par projection thermique sous vide ou sous basse pression au moyen d'une torche à plasma, après préchauffage et avec maintien du mandrin support (11) à une température supérieure à environ 850°C,
h) suppression des inserts solubles (152) des canaux (150) du corps (14) de la structure (10), des inserts solubles des canaux (120 ; 195A) formés autour du mandrin support et de la couche intermédiaire (12), et
i) retrait du mandrin support réutilisable (11).

2. Procédé selon la revendication 1, **caractérisé en ce que** avant l'étape de remplissage de canaux (150, 120) usinés dans le corps (14) de la structure (10) ou autour du mandrin support (11), des inserts filaires ou tubulaires sont introduits dans le fond des gorges formant les canaux (150, 120) pour permettre la formation ultérieure de cavités (151 A) sous les inserts solubles (152) dans le fond des canaux (150, 120) par retrait des inserts filaires (151) avant l'étape suivante de projection thermique.

3. Procédé selon l'une quelconque des revendications 1 et 2, **caractérisé en ce que** l'étape de remplissage des canaux (150) du corps (14) de la structure (10) à l'aide d'inserts solubles (152) consiste en une opération de remplissage incomplet des canaux (150) suivie d'une étape de projection thermique d'un matériau métallique qui termine le remplissage des canaux (150) et forme une couche métallique (16 A) recouvrant également les nervures (140) de séparation des canaux (150), puis d'une étape d'usinage superficiel de ladite couche métallique (16 A) jusqu'à la mise à nu de l'extrémité libre desdites nervures (140).

4. Procédé selon l'une quelconque des revendications 1 à 3, **caractérisé en ce que** lors des opérations de projection thermique avec préchauffage du mandrin support (11) à une température supérieure à environ 850°C, on procède pendant toute l'opération de projection thermique, à un apport de chaleur complémentaire par un dispositif (24) de chauffage additionnel voisin du mandrin support (11).

5. Procédé selon l'une quelconque des revendications 1 à 4, **caractérise en ce que** l'on réalise le corps (14) de la structure (10) par projection thermique d'une poudre d'alliage Cu-Ag-Zr.

6. Procédé selon la revendication 5, **caractérisé en ce que** l'on réalise le mandrin support (11) en cuivre pur.

7. Procédé selon l'une quelconque des revendications 1 à 6, **caractérisé en ce que** l'on réalise la couche intermédiaire (12) par projection thermique d'une poudre de fer.

8. Procédé selon la revendication 2, **caractérise en ce que** les inserts filaires (151) sont constitués par des fils à base de résine polyamide.

9. Procédé selon la revendication 3, **caractérisé en ce que** l'étape de projection thermique d'un matériau métallique qui termine le remplissage des canaux (150) consiste en la projection thermique d'une poudre de fer sous vide ou sous basse pression au moyen d'une torche à plasma.

10. Procédé selon l'une quelconque des revendications 1 à 9, **caractérisé en ce que** l'étape de formation d'une couche (17) de fermeture des canaux (150) du corps (14) de la structure (10) consiste en la projection thermique d'une poudre d'alliage de Cu-Ag-Zr et l'étape de formation d'une enveloppe externe (18) consiste en la projection thermique d'une poudre d'alliage à base de nickel tel qu'un alliage à base de nickel-cuivre constitué par le MONEL K 500 ou NU30AT.

11. Procédé selon l'une quelconque des revendications 1 à 10, **caractérisé en ce qu'**il comprend une étape supplémentaire de formation d'une couche de cuivre poreux (17') par projection thermique réalisée entre la formation de la couche (17) de fermeture des canaux (150) du corps (14) de la structure (10) et l'étape de formation d'une enveloppe externe (18).

12. Procédé selon l'une quelconque des revendications 1 à 11, **caractérisé en ce que** l'étape de suppression des inserts solubles (152) des canaux (150) du corps (14) de la structure (10) ou des canaux (120) formés autour du mandrin (11) est réalisée par circulation d'un fluide tel que l'acide chlorhydrique.

13. Procédé selon l'une quelconque des revendications 1 à 12, **caractérisé en ce que** l'étape c) de formation d'une série de canaux (120) régulièrement répartis autour du mandrin (11) a lieu avant l'étape b) de réalisation d'une couche intermédiaire (12) et comprend l'usinage par l'extérieur dans le mandrin support (11), après son montage sur ledit axe de rotation (113), de canaux (120) en forme de gorges, et le remplissage desdits canaux (120) du mandrin support (11) à l'aide d'inserts solubles comprenant un mélange d'un liant organique et de poudre métallique.

14. Procédé selon la revendication 13, **caractérisé en ce qu'**il comprend en outre, après l'étape de réalisation d'une couche intermédiaire (12), l'étape supplémentaire consistant en la réalisation, par projection thermique, sous vide ou sous basse pression au moyen d'une torche plasma, d'une couche (13) de faible rugosité d'un matériau formant barrière thermique de type métallique ou oxydes.

15. Procédé selon les revendications 5 et 14, **caractérisé en ce que** l'on réalise la barrière thermique (13) par projection thermique d'une poudre d'un superalliage tel que du MCr Al YTa.

16. Procédé selon la revendication 15, **caractérisé en ce que** l'on réalise la barrière thermique (13) en projetant en outre avant le superalliage une poudre de zircone ytriée pour former une couche superficielle de ce matériau.

17. Procédé selon l'une quelconque des revendications 1 à 12, **caractérisé en ce que** l'étape c) de formation d'une série de canaux (195) régulièrement répartis autour du mandrin (11) a lieu après l'étape b) de réalisation d'une couche intermédiaire (12) et comprend le dépôt d'un alliage à base de cuivre sur la couche intermédiaire (12), l'usinage de l'alliage à base de cuivre pour définir des ailettes radiales (19A) entre lesquelles sont ménagés des interstices constituant lesdits canaux (195A), et le remplissage desdits canaux (195A) à l'aide d'inserts solubles (192) comprenant un mélange d'un liant organique et de poudre métallique.

18. Procédé selon la revendication 17, **caractérisé en ce qu'**il comprend en outre une étape consistant à déposer une couche de fer supplémentaire qui comble une partie restée libre dans les canaux (195A) au-dessus des inserts solubles (192) et recouvre également les ailettes (19A) et une étape consistant à usiner ladite couche de fer supplémentaire pour faire émerger les ailettes (19A) à base de cuivre et ne conserver qu'une mince couche (193) de fer au-dessus de chaque insert soluble (192), cette couche (193) étant alignée avec la face libre des ailettes (19A).

19. Procédé selon la revendication 3, **caractérisé en ce qu'**il comprend en outre, après l'étape b) de formation d'une couche intermédiaire (12) sur le mandrin support (11), une étape supplémentaire b₁) consistant à usiner dans la couche intermédiaire (12) des rainures extérieures (196) présentant une hauteur h et une largeur ℓ telles que h/ℓ ≤ 1, en vue de former des ailettes radiales (19B) lors de l'étape de réalisation du corps (14) de la structure (10) par projection thermique.

20. Procédé selon la revendication 2, **caractérisé en ce que** les inserts filaires ou tubulaires sont réalisés en matière plastique, telle qu'une résine polyamide.

21. Procédé selon l'une quelconque des revendications 1 à 20, **caractérise en ce qu'**il est appliqué à la fabrication d'une structure (10) constituée par une chambre de combustion à haut flux thermique, notamment pour moteur-fusée.

22. Procédé selon l'une quelconque des revendications 1 à 20, **caractérise en ce qu'**il est appliqué à la fabrication d'une structure (10) constituée par un échangeur de chaleur.

## Claims

1. A method of manufacturing a high heat flux regenerative circuit comprising a structure (10) having an inner functional surface (13) in contact with a first fluid and a set of channels (150) formed in the body (14) of the structure (10) for conveying a second fluid in heat exchange relationship with the first fluid, the method comprising the following steps:
a) placing a reusable support core (11) representing the profile of said inner functional surface (13) of the structure (10) about an axis of rotation (113), the support core (11) being made of a material whose coefficient of thermal expansion is very close to or slightly greater than that of a material of the body (14) of the structure (10);
b) making an intermediate layer (12) on the support core (11) out of a material that is different from that of the support core (11) and that of the body (14) of the structure (10);
c) forming a series of channels (120; 195A) regularly spaced apart around the core (11) and opening out to face said intermediate layer (12), each of the channels (120; 195A) being provided with a soluble insert comprising a mixture of organic binder and metal powder;
d) preheating the support core (11) to a temperature greater than about 850°C and making the body (14) of the structure (10) by thermal spraying under a vacuum or low pressure by means of a plasma torch, while maintaining the temperature of the support core (11) at said temperature greater than 850°C;
e) without dismantling the support core (11), machining channels (150) in the form of grooves in the outside of the body (14) of the structure (10);
f) filling the channels (150) in the body (14) of the structure (10) with soluble inserts (152) comprising a mixture of organic binder and metal powder;
g) forming a layer (17) for closing the channels (150) in the body (14) of the structure (10) and forming an outer envelope (18) of the structure (10) by thermal spraying under a vacuum or low pressure by means of a plasma torch, after preheating and while maintaining the support core (11) at a temperature greater than about 850°C;
h) eliminating the soluble inserts (152) in the channels (150) of the body (14) of the structure (10), the soluble inserts in the channels (120; 195A) formed around the support core, and the intermediate layer (12); and
i) withdrawing the reusable support core (11).

2. A method according to claim 1, **characterised in that**, prior to the step of filling the channels (150, 120) machined in the body (14) of the structure (10) or around the support core (11), filament or tubular inserts are inserted in the bottoms of the grooves forming the channels (150, 120) so as to make it possible subsequently to form cavities (151 A) in the bottoms of the channels (150, 120) beneath the soluble inserts (152) by withdrawing the filamentary inserts (151) prior to the following thermal spraying step.

3. A method according to any one of claims 1 and 2, **characterised in that** the step of filling the channels (150) in the body (14) of the structure (10) with soluble inserts (152) consists in an operation of filling the channels (150) incompletely followed by a step of thermally spraying a metal material which finishes off the filling of the channels (150) to form a metal layer (16 A) which also covers the ribs (140) between the channels (150), and then followed by a step of machining the surface of said metal layer (16 A) until the free ends of said ribs (140) have been laid bare.

4. A method according to any one of claims 1 to 3, **characterised in that**, during the operations of thermal spraying with preheating of the support core (11) to a temperature greater than about 850°C, additional heat is provided throughout the thermal spraying operation by means of an additional heater device (24) close to the support core (11).

5. A method according to any one of claims 1 to 4, **characterised in that** the body (14) of the structure (10) is made by thermally spraying a Cu-Ag-Zr alloy powder.

6. A method according to claim 5, **characterised in that** the support core (11) is made of pure copper.

7. A method according to any one of claims 1 to 6, **characterised in that** the intermediate layer (12) is made by thermally spraying iron powder.

8. A method according to claim 2, **characterised in that** the filamentary inserts (151) are constituted by filaments based on polyamide resin.

9. A method according to claim 3, **characterised in that** the step of thermally spraying a metal material to terminate filling of the channels (150) consists in thermally spraying iron powder under a vacuum or under low pressure by means of a plasma torch.

10. A method according to any one of claims 1 to 9, **characterised in that** the step of forming a layer (17) for closing the channels (150) in the body (14) of the structure (10) consists in thermally spraying a Cu-Ag-Zr alloy powder, and the step of forming an outer envelope (18) consists in thermally spraying an alloy powder based on nickel such as a nickel-copper based alloy constituted by MONEL K500 or NU30AT.

11. A method according to any one of claims 1 to 10, **characterised in that** it includes an additional step of forming a layer (17') of porous copper by thermal spraying performed between forming the layer (17) for closing the channels (150) in the body (14) of the structure (10) and the step of forming an outer envelope (18).

12. A method according to any one of claims 1 to 11, **characterised in that** the step of eliminating the soluble inserts (152) from the channels (150) in the body (14) of the structure (10) or from channels (120) formed around the core (11) is performed by circulating a fluid such as hydrochloric acid.

13. A method according to any one of claims 1 to 12, **characterised in that** step c) of forming a series of channels (120) that are regularly distributed around the core (11) takes place prior to step b) of making an intermediate layer (12) and comprises machining the support core (11) from the outside after it has been mounted on said axis (113) of rotation to obtain channels (120) in the form of grooves, and filling said channels (120) in the support core (11) by means of soluble inserts comprising a mixture of organic binder and metal powder.

14. A method according to claim 13, **characterised in that** it further comprises, after the step of making an intermediate layer (12) an additional step consisting in making a layer (13) of low roughness by thermal spraying under a vacuum or under low pressure by means of a plasma torch, which layer (13) is made of a thermal barrier forming material of the metal type or of the oxide type.

15. A method according to claims 5 and 14, **characterised in that** the thermal barrier (13) is made by thermally spraying a powder of a superalloy such as MCr Al YTa.

16. A method according to claim 15, **characterised in that** the thermal barrier (13) is made, prior to spraying the superalloy, by spraying yttrium-containing zirconia powder so as to form a surface layer of said material.

17. A method according to any one of claims 1 to 12, **characterised in that** step c) of forming a series of channels (195) regularly distributed around the core (11) takes place after step b) of making an intermediate layer (12), and comprises depositing a copper-based alloy on the intermediate layer (12), machining the copper-based alloy to define radial fins (19A) between which gaps are formed to constitute said channels (195A), and filling said channels (195A) with soluble inserts (192) comprising a mixture of organic binder and metal powder.

18. A method according to claim 17, **characterised in that** it further comprises a step consisting in depositing an additional iron layer to fill portions of the channels (195A) that have remained empty over the soluble insert (192) and also to cover the fins (19A), and a step consisting in machining said additional iron layer to cause the copper-based fins (19A) to emerge so as to conserve only a thin layer (193) of iron over each soluble insert (192), said layer (193) being flush with the free faces of the fins (19A).

19. A method according to claim 3, **characterised in that** it further comprises, after step b) of making an intermediate layer (12) on the support core (11), the additional step b₁) of machining in the intermediate layer (12) outer grooves (196) having a height h and a width such that h/ℓ≤1, to form radial fins (19B) during the step of making the body (14) of the structure (10) by thermal spraying.

20. A method according to claim 2, **characterised in that** the filament or tubular inserts are made of a plastics material, such as a polyamide resin.

21. A method according to any one of claims 1 to 20, **characterised in that** said method is applied to the manufacture of a structure (10) constituted by a high heat flux combustion chamber, namely for a rocket engine.

22. A method according to any one of claims 1 to 20, **characterised in that** said method is applied to the manufacture of a structure (10) constituted by a heat exchanger.

## Patentansprüche

1. Verfahren zur Herstellung eines regenerativen Kreislaufs mit hohem Wärmefluss, aufweisend eine Struktur (10) mit einer inneren funktionellen Oberfläche (13) in Kontakt mit einem ersten Fluid und eine im Hauptteil(14) der Struktur (10) gebildete Anordnung von Kanälen (150), welche von einem zweiten Fluid im Wärmetauschverhältnis mit dem ersten Fluid durchströmt werden kann, wobei das Verfahren die folgenden Schritte aufweist:
A) Anordnen um eine Rotationsachse (113) eines wiederverwendbaren Trägerdorns(11), welcher dem Profil der inneren funktionellen Oberfläche (13) der Struktur (10) entspricht, wobei der Trägerdorn (11) aus einem Material gemacht ist, dessen Wärmeausdehnungskoeffizient sehr nah oder geringfügig über dem des Materials des Hauptteils (14) der Struktur (10) ist,
b) Erzeugen einer Zwischenschicht (12) auf dem Trägerdorn (11) aus einem anderen Material als dem des Trägerdorns (11) und des Hauptteils (14) der Struktur (10),
c) Bilden einer Anzahl von Kanälen (120, 195A), welche regelmäßig um den Dorn (11) verteilt sind und sich zu der Zwischenschicht (12) öffnen, wobei jeder der Kanäle (120; 195A) mit einem löslichen Einsatz versehen ist, welcher eine Mischung eines organischen Bindemittels und metallischen Pulvers aufweist,
d) Vorwärmen des Trägerdorns (11) auf eine Temperatur von größer als ca. 850°C und Herstellen des Hauptteils (14) der Struktur (10) durch thermisches Sprühen unter Vakuum oder unter geringem Druck mittels eines Plasmabrenners, während die Temperatur des Trägerdorns bei der genannten Temperatur von über 850°C gehalten wird,
e) Einarbeiten von Kanälen (150) in Form von Rillen in dem Hauptteil (14) der Struktur (10) an der Außenseite, ohne den Trägerkern (11) zu demontieren,
f) Füllen der Kanäle (150) des Hauptteils (14) der Struktur (10) mit löslichen Einsätzen (152), welche eine Mischung eines organischen Bindemittels und metallischen Pulvers aufweisen,
g) Bilden einer schließenden Schicht (17) der Kanäle (150) des Hauptteils (14) der Struktur (10) und Bilden einer äußeren Umhüllung (18) der Struktur (10) durch thermisches Sprühen unter Vakuum oder bei geringem Druck mittels eines Plasmabrenners, nach Vorwärmen und bei Halten des Trägerdorns (11) bei einer Temperatur von über ca. 850°C,
(h) Entfernen des löslichen Einsätze (152) der Kanäle (150) des Hauptteils (14) der Struktur (10), der löslichen Einsätze der Kanäle (120; 195A), welche um den Trägerdom herum gebildet wurden und der Zwischenschicht (12), und
(i) Entfemen des wiederverwendbaren Trägerdoms (11).

2. Verfahren nach Anspruch 1,
**dadurch gekennzeichnet, dass** vor dem Schritt des Füllens der Kanäle (150, 120), welche in das Hauptteil (14) der Struktur (10) oder um den Trägerdorn (11) herum eingearbeitet werden, fadenartige oder röhrenförmige Einsätze in die Böden der Rillen eingebracht werden, welche die Kanäle (150, 120) bilden, um die anschließende Bildung von Hohlräumen (151A) unter den löslichen Einsätzen (152) in den Böden der Kanäle (150, 120) zu ermöglichen, durch Entfernen der fadenartigen Einsätze (151) vor dem folgenden Schritt des thermischen Sprühens.

3. Verfahren nach einem der Ansprüche 1 oder 2,
**dadurch gekennzeichnet, dass** der Schritt des Füllens der Kanäle (150) des Hauptteils (14) der Struktur (10) mittels löslicher Einsätze (152) aus einem unvollständigem Füllvorgang der Kanäle (150) besteht, gefolgt von einem Schritt des thermischen Sprühens eines metallischen Materials, welcher das Füllen der Kanäle (150) vervollständigt und eine metallische Schicht (16A) bildet, welche auch die trennenden Rippen (140) der Kanäle (150) bedeckt, gefolgt von einem Schritt des oberflächlichen Bearbeitens der metallischen Schicht (16A), bis die freien Enden der Rippen (140) freigelegt werden.

4. Verfahren nach einem der Ansprüche 1 bis 3,
**dadurch gekennzeichnet, dass** während der Schritte des thermischen Sprühens mit Vorwärmen des Trägerdorns (11) auf eine Temperatur von ca. mehr als 850°C, eine zusätzliche Wärmezufuhr während des gesamten Vorgangs des thermischen Sprühens bereitgestellt wird durch eine zusätzliche Heizvorrichtung (24), welche in der Nähe des Trägerdorns (11) ist.

5. Verfahren nach einem der Ansprüche 1 bis 4,
**dadurch gekennzeichnet, dass** der Hauptteil (14) der Struktur (10) durch thermisches Sprühen eines Cu-Ag-Zr-Legierungspulvers hergestellt wird.

6. Verfahren nach Anspruch 5,
**dadurch gekennzeichnet, dass** der Trägerdorn (11) aus purem Kupfer gemacht ist.

7. Verfahren nach einem der Ansprüche 1 bis 6,
**dadurch gekennzeichnet, dass** die Zwischenschicht (12) durch thermisches Sprühen eines Eisenpulvers erzeugt wird.

8. Verfahren nach Anspruch 2,
**dadurch gekennzeichnet, dass** die fadenartigen Einsätze (151) aus Fäden mit Polyamidharzbasis gemacht sind.

9. Verfahren nach Anspruch 3,
**dadurch gekennzeichnet, dass** der Schritt des thermischen Sprühens eines metallischen Materials, welches das Füllen der Kanäle (150) vervollständigt, aus einem thermischen Sprühen eines Eisenpulvers unter Vakuum oder unter niederem Druck mittels eines Plasmabrenners besteht.

10. Verfahren nach einem der Ansprüche 1 bis 9,
**dadurch gekennzeichnet, dass** der Schritt des Bildens einer Schicht (17) zum Schließen der Kanäle (150) des Hauptteils (14) der Struktur (10) aus dem thermischen Sprühen eines Cu-Ag-Zr-Legierungspulvers besteht und der Schritt des Bildens einer äußeren Umhüllungs (18) aus dem thermischen Sprühen eines Legierungspulvers auf Nickelbasis besteht, wie zum Beispiel eine Legierung auf Nickel-Kupferbasis, bestehend aus MONEL K 500 oder NU30AT.

11. Verfahren nach einem der Ansprüche 1 bis 10,
**dadurch gekennzeichnet, dass** es einen zusätzlichen Schritt des Erzeugens einer porösen Kupferschicht (17') durch thermisches Sprühen aufweist, welcher zwischen dem Erzeugen der schließenden Schicht (17) der Kanäle (150) des Hauptteils (14) der Struktur (10) und dem Schritt des Bildens einer äußeren Umhüllungs (18) durchgeführt wird.

12. Verfahren nach einem der Ansprüche 1 bis 11,
**dadurch gekennzeichnet, dass** der Schritt des Entfernens der löslichen Einsätze (152) der Kanäle (150) des Hauptteils (14) der Struktur (10) oder der Kanäle (120), welche um den Trägerdorn (11) herum gebildet sind, durch Zirkulieren eines Fluids durchgeführt wird, zum Beispiel durch Chlorwasserstoffsäure.

13. Verfahren nach einem der Ansprüche 1 bis 12,
**dadurch gekennzeichnet, dass** der Schritt c) des Bildens einer Anzahl von Kanälen (120), welche regelmäßig um den Trägerdorn (11) verteilt sind, vor dem Schritt b) des Erzeugens einer Zwischenschicht (12) stattfindet und das Bearbeiten der Oberfläche des Trägerdorns (11) nach seiner Montage auf der Rotationsachse (113) aufweist, um Kanäle (120) in Form von Rillen zu bilden und das Füllen der Kanäle in dem Trägerdom durch lösliche Einsätze eine Mischung aus organischem Bindemittel und Metallpulver aufweist.

14. Verfahren nach Anspruch 13,
**dadurch gekennzeichnet, dass** es außerdem nach dem Schritt des Erzeugens einer Zwischenschicht (12) den zusätzlichen Schritt aufweist, der aus dem Erzeugen durch thermisches Sprühen unter Vakuum oder bei geringem Druck mit einem Plasmabrenner einer Schicht (13) mit geringer Rauigkeit eines eine Wärmebarriere (13) bildenden Materials des metallischen Typs oder des Oxydtyps besteht.

15. Verfahren nach Ansprüchen 5 und 14,
**dadurch gekennzeichnet, dass** die Wärmebarriere (13) durch thermisches Sprühen eines Pulvers einer Superlegierung, zum Beispiel MCr Al YTa erzeugt wird.

16. Verfahren nach Anspruch 15,
**dadurch gekennzeichnet, dass** die Wärmebarriere (13) außerdem durch Sprühen, vor der Superlegierung, eines Ytrium-Zirkonpulvers erzeugt wird, um eine oberflächliche Schicht aus diesem Material zu bilden.

17. Verfahren nach einem der Ansprüche 1 bis 12,
**dadurch gekennzeichnet, dass** der Schritt c) des Bildens einer Anzahl von Kanälen (195), welche regelmäßig um den Dorn (11) herum verteilt sind, nach dem Schritt b) des Erzeugens einer Zwischenschicht (12) stattfindet und das Aufbringen einer Legierung auf Kupferbasis auf der Zwischenschicht (12), das Bearbeiten der Legierung auf Kupferbasis, um radiale Ausragungen (19A) zu definieren, zwischen welchen Lücken sind, welche die Kanäle (195A) bilden, und das Füllen der Kanäle (195A) mit löslichen Einsätzen (192) aufweist, welche eine Mischung aus organischem Bindemittel und metallischem Pulver aufweisen.

18. Verfahren nach Anspruch 17,
**dadurch gekennzeichnet, dass** es außerdem einen Schritt aufweist, welcher besteht aus dem Aufbringen einer zusätzlichen Eisenschicht, welcher einen freigebliebenen Teil in den Kanälen (195A) über den löslichen Einsätzen (192) füllt und ebenfalls die Ausragungen (19A) bedeckt, und einem Schritt, der besteht aus Bearbeiten der zusätzlichen Eisenschicht, damit die Ausragungen (19A) auf Kupferbasis hervortreten, so dass nur eine dünne Schicht (193) aus Eisen über jedem löslichen Einsatz (192) verbleibt, wobei diese Schicht (193) mit der freien Fläche der Ausragungen (19A) bündig ist.

19. Verfahren nach Anspruch 3,
**dadurch gekennzeichnet, dass** es außerdem nach dem Schritt b) des Erzeugens einer Zwischenschicht (12) auf dem Trägerdorn (11) einen zusätzlichen Schritt b₁) aufweist, der besteht aus Einarbeiten in der Zwischenschicht (12) äußere Rillen (196) mit einer Höhe h und einer Breite I so dass h/l≤1, um radiale Ausragungen (19b) während des Schritts des Erzeugens des Hauptteils (14) der Struktur (10) durch thermisches Sprühen zu bilden.

20. Verfahren nach Anspruch 2,
**dadurch gekennzeichnet, dass** die fadenartigen oder röhrenartigen Einsätze aus Kunststoffmaterial erzeugt sind, zum Beispiel ein Polyamidharz.

21. Verfahren nach einem der Ansprüche 1 bis 20,
**dadurch gekennzeichnet, dass** es angewendet wird bei der Herstellung einer Struktur (10), welche eine Brennkammer mit großem Wärmefluss bildet, insbesondere für Raketenmotoren.

22. Verfahren nach einem der Ansprüche 1 bis 20,
**dadurch gekennzeichnet, dass** es verwendet wird zur Herstellung einer Struktur (10), welche einen Wärmetauscher bildet.
